# EUROPÄISCHE PATENTSCHRIFT

(11) **EP 3 718 186 B1**
(45) Veröffentlichungstag und Bekanntmachung des Hinweises auf die Patenterteilung: **05.01.2022**
(21) Anmeldenummer: 18800136.6
(22) Anmeldetag: 08.11.2018
(51) Int. Cl.: H02G 1/12

(54) **ABISOLIERZANGE**
STRIPPING PLIERS
PINCE A DÉNUDER

(30) Priorität: 29.11.2017 DE 102017128228
(43) Veröffentlichungstag der Anmeldung: 07.10.2020
(73) Patentinhaber: Rennsteig Werkzeuge GmbH, 98587 Steinbach-Hallenberg (DE)
(72) Erfinder: HOLLAND-MORITZ, Georg, 98587 Steinbach-Hallenberg (DE); BRÜCKNER, Michael, 98587 Steinbach-Hallenberg (DE); LEGLER, Ralf, 98587 Altersbach (DE)
(74) Vertreter: Müller, Enno
(86) Internationale Anmeldenummer: PCT/EP2018/080610
(87) Internationale Veröffentlichungsnummer: WO 2019/105708

(56) Entgegenhaltungen:
- EP-A1- 3 054 541
- EP-A2- 0 253 528
- EP-A2- 0 707 366
- DE-U1-202008 014 111
- US-A- 4 485 696

## Beschreibung

### Gebiet der Technik

Die Erfindung betrifft eine Abisolierzange mit zwei äußeren Klemmbacken, zwei inneren Schneidbacken und zwei Griffteilen, wobei die Schneidbacken durch eine Zugstange im Zuge eines Zusammendrückens der Griffteile gegen die Kraft einer auf die Zugstange wirkenden Feder aus einer Ausgangsstellung in eine Endstellung verlagerbar sind, wobei weiter die Zugstange von einer in einem Langloch bewegbaren Zugachse durchsetzt ist.

### Stand der Technik

· Abisolierzangen der in Rede stehenden Art sind bekannt. Es wird beispielsweise auf die DE 44 20 006 C2 verwiesen, darüber hinaus auf die EP 1 557 920 B1 (US 7,513,177 B2), weiter beispielsweise auf die US 5,724,871. Derartige Zangen, auch verbreitet als Automatik-Abisolierzangen, dienen zum Abisolieren von Leiterenden, wobei im Zuge des Zusammendrückens der Griffteile der Abisolierzange das abzuisolierende Kabel im Bereich der äußeren Klemmbacken geklemmt wird, während nachfolgend die Schneidbacken die Isolierung durchtrennen. Im Zuge des weiteren Zusammendrückens der Griffteile erfolgt unter Nutzung der Schneidbacken ein Abzug des abgetrennten Isolierabschnitts vom Leiter, zur gewünschten Freilegung des Leiterendes.

Aus der EP 253 528 A2, der EP 3 054 541 A1 und der US 4 485 696 A sind Abisolierzangen bekannt, bei welchen die Schneidbacken vermittels einer Zugstange im Zuge eines Zusammendrückens der Griffteile gegen die Kraft einer auf die Zugstange wirkenden Feder verlagerbar sind. Die auf die Zugstange wirkende Federkraft kann jedoch nicht in einfacher Weise aufgehoben werden, wie dies beispielsweise bei einem Wechsel von Schneidbacken erwünscht ist.

Eine weitere Abisolierzange, bei welcher die Zugstange jedoch nicht gegen Federkraft verschiebbar ist, ist aus der EP 707 366 A2 bekannt.

### Zusammenfassung der Erfindung

Im Hinblick auf den vorbeschriebenen Stand der Technik wird eine Aufgabe der Erfindung insbesondere darin gesehen, eine Abisolierzange der in Rede stehenden Art in handhabungstechnisch günstiger Weise weiter verbessert auszugestalten.

Diese Aufgabe wird durch eine Abisolierzange gemäß Anspruch 1 gelöst, bei welcher darauf abgestellt ist, dass die Zugstange an ihrem griffseitigen Ende ein an der Zugstange befestigtes Verschiebeteil aufweist, das gegen die Kraft der Feder relativ zu der Zugstange verschiebbar ist, zur Befreiung der Zugstange aus einer griffseitigen Lagerung.

Die vorgesehene Feder kann, wie auch bevorzugt, eine, die Zugstange in ihre Grundstellung belastende Rückstellkraft (gegebenenfalls zusätzlich) anbieten. Die Grundstellung ist bevorzugt die Offenstellung sowohl der Klemmbacken als auch der Schneidbacken. Es kann darüber hinaus auch zumindest eine weitere Feder zur Rückstellung der Abisolierzange in die Grundstellung vorgesehen sein, insbesondere eine weitere Feder, die bevorzugt auf die Hebelmechanik der Griffteile und der Klemmbacken wirkt.

Es besteht das Bedürfnis, die auf die Zugstange wirkende Federkraft bei Bedarf auszusetzen. Dies ist durch die erfindungsgemäße Lösung in handhabungstechnisch vorteilhafter Weise gelöst. Die diesbezügliche Feder, die im Bereich eines der Griffteile in üblicher Weise ihre Abstützung findet, kann verliersicher aus ihrer griffseitigen Lagerung befreit werden. Auch nach einer solchen Befreiung ist die Feder in bevorzugter Ausgestaltung weiterhin verliersicher an der Zugstange gehaltert. Dies bietet entsprechend darüber hinaus eine günstige Handhabung bezüglich der Wiederherstellung der griffseitigen Federabstützung der Zugstange.

Das an der Zugstange befestigte Verschiebeteil bietet der Feder die nötige Abstützfläche. In der üblichen Nutzungsstellung wird die Kraft über diese Abstützfläche in das zugeordnete Griffteil abgeleitet.

Bevorzugt ist das Verschiebeteil als Hülse ausgebildet.

So kann gemäß einer weiter bevorzugten Ausgestaltung vorgesehen sein, dass die aus der griffseitigen Lagerung befreite Zugstange um die Zugachse schwenkbar ist, zur Freigabe der Schneidbacken. Zufolge der ermöglichten, handhabungstechnisch günstigen Aufhebung der griffseitigen Federabstützung der Zugstange kann diese zumindest um die auf die Zugstange im Zuge eines Abisoliervorganges wirkende Zugachse verschwenkt werden, gegebenenfalls in Bewegungsüberlagerung mit einer Linearverlagerung. Insbesondere durch die ermöglichte Verschwenkung der befreiten Zugstange kann eine Freigabe der Schneidbacken erreicht werden, beispielsweise um hierdurch einen handhabungstechnisch günstigen Schneidbackenwechsel zu ermöglichen. Durch die Verschwenkung kann die Zugstange aus einer die Schneidbacken im Zuge eines Zusammendrückens der Griffteile mitschleppenden Stellung in eine auch bei Zusammendrücken der Griffteile und damit üblicherweise einhergehender Schiebeverlagerung der Zugstange die Schneidbacken nicht verlagernde Ausrichtung bewegt werden.

Auch kann eine Längsrichtung des Langlochs, durch welches die Zugachse greift, mit einer Verschieberichtung der Zugstange bei üblicher Nutzung einen spitzen Winkel einschließen. Dieser spitze Winkel kann bis hin zu beispielsweise 85° betragen, so weiter beispielsweise 60 bis 75°. Auch aus dieser Langloch-Ausrichtung kann sich bei befreiter Zugstange eine Überlagerung von Schwenk- und Linearbewegung der Zugstange zur Befreiung der Schneidbacken ergeben.

Die Aufhebung der griffseitigen Lagerung der Feder beziehungsweise der die Feder umfassenden Hülse ist bevorzugt nur willensbetont durchführbar. Ein ordnungsgemäßer Abisoliervorgang ist bei entsprechender Halterung der Hülse und der Feder in dem zugeordneten Griffteil sichergestellt.

In diesem Zusammenhang erweist es sich von Vorteil, wenn das Verschiebeteil, also bspw. die Hülse, zur griffseitigen Lagerung der Zugstange einen Rastvorsprung aufweist, zum Eingriff in eine an dem Griff ausgebildete Rastausnehmung. Zufolge Verlagerung des Verschiebeteils entgegen der Kraft der auf diese einwirkenden Feder kann der Rastvorsprung aus der Raststellung mit der griffseitigen Rastausnehmung verlagert werden. Die Betriebsstellung kann entsprechend bevorzugt formschlüssig gesichert sein.

Auch kann die Zugstange zugeordnet ihrem griffseitigem Ende ein weiteres Langloch aufweisen, das von einem Halterungsteil des Verschiebeteils durchgriffen ist. Das Halterungsteil kann stift- oder zapfenartig gestaltet sein, weiter beispielsweise in der Hülsenwandung verankert. Die Zugstange greift mit ihrem, dieses weitere Langloch aufweisenden Abschnitt in das Verschiebeteil. Das Verschiebeteil ist hierdurch in einer bevorzugten Ausgestaltung verliersicher an der Zugstange gehalten, unter Ermöglichung einer im Wesentlichen in Erstreckungsrichtung der Zugstange beziehungsweise in Erstreckungsrichtung des Verschiebeteils gegebenen Relativverlagerung des Verschiebeteils zu der Zugstange.

In einer möglichen Ausgestaltung kann sich die Feder einerseits an der Zugstange und andererseits an dem Verschiebeteil abstützen. Die Feder kann, wie auch bevorzugt, eine Zylinderdruckfeder sein. Diese kann die Zugstange innerhalb des Verschiebeteils umfassen.

Um einen handhabungstechnisch günstigen Wechsel der Schneidbacken anzubieten, kann die Zugstange, zugeordnet den Schneidbacken, eine im Wesentlichen in Schließ- bzw. Öffnungsrichtung der Schneidbacken verlaufende Einfahröffnung für eine Schwenkachse der Schneidbacken aufweisen. Zufolge dieser Ausgestaltung kann allein zufolge der nach Befreiung der Zugstange aus der griffseitigen Lagerung ermöglichten Schwenkverlagerung der Zugstange eine Freigabestellung der Schneidbacken bezüglich der Zugstange erreicht werden. Der diesbezügliche Zugstangenabschnitt, beispielsweise ein solcher Endbereich der Zugstange, kann entsprechend eine schlitzförmige Einfahröffnung zum Einfangen der Schwenkachse der Schneidbacken im Zuge der Wiederherstellung der üblichen Nutzungsstellung der Zugstange aufweisen. Die Aufhebung und Wiederfindung der Zuordnungsstellung von Zugstange und Schneidbacken kann so entsprechend selbsttätig im Zuge der Befreiung der Zugstange aus der griffseitigen Lagerung und nachfolgender Verschwenkung beziehungsweise im Zuge der Wiederherstellung der Betriebsstellung erreicht werden.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Fig. 1: in perspektivischer Darstellung eine Abisolierzange;
- Fig. 2: in perspektivischer Einzeldarstellung ein Schneidbackenpaar;
- Fig. 3: das Schneidbackenpaar in Seitenansicht;
- Fig. 4: eine weitere perspektivische Darstellung des Schneidbackenpaares;
- Fig. 5: den Schnitt gemäß der Linie V-V in Figur 4;
- Fig. 6: eine Längsschnittdarstellung durch die Abisolierzange, eine unbetätigte Grundstellung betreffend;
- Fig. 7: eine der Figur 6 entsprechende Darstellung, jedoch eine Zwischenstellung im Zuge der Betätigung betreffend;
- Fig. 8: eine Folgedarstellung zu Figur 7 im Zuge der weiteren Betätigung der Abisolierzange;
- Fig. 9: eine Folgedarstellung zu Figur 8, die Betätigungsendstellung betreffend;
- Fig. 10: eine im Wesentlichen der Figur 7 entsprechende Längsschnittdarstellung der Abisolierzange, betreffend eine Entriegelungsstellung einer Zugstange zur Ermöglichung eines Wechsels des Schneidbackenpaares;
- Fig. 11: die Herausvergrößerung des Bereiches XI in Figur 6;
- Fig. 12: den in Figur 11 dargestellten Bereich in partiell geschnittener Perspektivdarstellung;
- Fig. 13: eine weitere perspektivische Explosionsdarstellung des in den Figuren 11 und 12 dargestellten Bereichs;
- Fig. 14: eine Klemmbacke der Abisolierzange in Stirnansicht;
- Fig. 15: die Klemmbacke in einer weiteren Ansicht;
- Fig. 16: die Klemmbacke in Seitenansicht;
- Fig. 17: die Herausvergrößerung des Bereiches XVII in Figur 16;
- Fig. 18: die Draufsicht auf die Klemmbacke gemäß Pfeil XVIII in Figur 14;
- Fig. 19: den Schnitt gemäß der Linie XIX-XIX in Figur 18;
- Fig. 20: den Schnitt gemäß der Linie XX-XX in Figur 18;
- Fig. 21: eine Schneide einer Schneidbacke in perspektivischer Einzeldarstellung;
- Fig. 22: den Schnitt gemäß der Linie XXII-XXII in Figur 21 durch die Schneide;
- Fig. 23: die Schneide in einer vergrößerten Seitenansicht;
- Fig. 24: eine vergrößerte schematische Schnittdarstellung der Anordnung beider Schneiden des Schneidbackenpaares;
- Fig. 25: eine perspektivische Darstellung des Zangenmaulbereichs bei zwischen die Klemmbacken eingelegtem, abzuisolierenden Kabel;
- Fig. 26: eine teilweise explosionsperspektivische Darstellung des Bereiches XXVI in Figur 1;
- Fig. 27: in explosionsperspektivischer Darstellung die Zangenbacken der Abisolierzange, sowie Mittel zur Einstellung einer Schnitttiefe der Schneidbacken;
- Fig. 28: eine weitere perspektivische Darstellung gemäß Figur 27;
- Fig. 29: in perspektivischer Darstellung die Verstellmittel-Anordnung zur Einstellung einer Schnitttiefe der Schneidbacken;
- Fig. 30: die Verstellmittel-Anordnung in Seitenansicht;
- Fig. 31: in einer Seitenansicht ein Exzenterteil der VerstellmittelAnordnung mit einem ersten und einem zweiten Exzenter;
- Fig. 32: die Anordnung gemäß Figur 31 in perspektivischer Darstellung;
- Fig. 33: den Schnitt gemäß der Linie XXXIII-XXXIII in Figur 31 durch den Bereich des ersten Exzenters;
- Fig. 34: den Schnitt gemäß der Linie XXXIV-XXXIV in Figur 31 durch den Bereich des zweiten Exzenters;
- Fig. 35: eine schematische Schnittdarstellung des Bereiches XXXV in Figur 7;
- Fig. 36: eine der Figur 35 entsprechende Darstellung, jedoch nach einer manuellen Schnitttiefen-Verstellung über die VerstellmittelAnordnung.

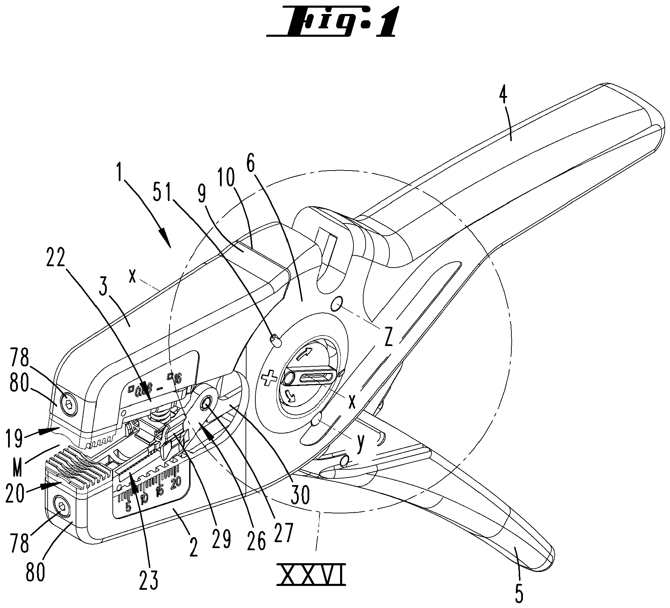

Dargestellt und beschrieben ist, zunächst mit Bezug zu Figur 1, eine Abisolierzange 1 mit zwei Zangenbacken 2, 3 und zwei Griffteilen 4, 5. Die Zangenbacken 2 und 3 begrenzen ein Zangenmaul M.

Die Zangenbacke 2, die nachstehend als feststehend bezeichnet ist, ist über einen Wangenbereich 6 unmittelbar und fest mit dem Griffteil 4 verbunden.

Im Wangenbereich 6 bietet die Abisolierzange 1 eine Lagerung für eine Drehachse 7 mit einer geometrischen Achse x an, um welche die weiter nachstehend bewegliche Zangenbacke 3 drehbar gehaltert ist.

Die Lagerung der beweglichen Zangenbacke 3 an der Drehachse 7 ergibt sich im Bereich eines in Erstreckungsrichtung der Achse x in Projektion zu dem Wangenbereich 6 der feststehenden Zangenbacke 3 sich erstreckenden Schulterbereiches 8 der beweglichen Zangenbacke 3.

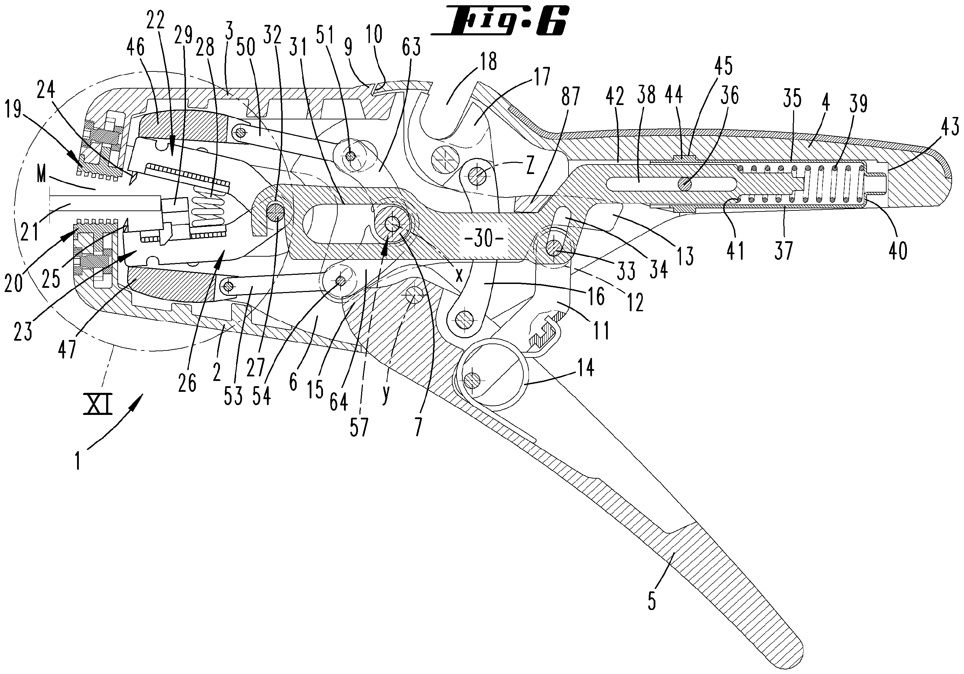

Die Zangenmaul-Offenstellung, beispielsweise gemäß der Darstellung in Figur 6, ist anschlagbegrenzt, zufolge Abstützung eines Vorsprungbereiches 9 an der beweglichen Zangenbacke 3 an einer zugeordneten Abstützfläche 10 der feststehenden Zangenbacke 2.

Das weitere Griffteil 5 ist um eine weitere, parallel zur Drehachse 7 beziehungsweise deren geometrischen Achse x ausgerichtete geometrische Achse y schwenkgelagert. Die diesbezügliche körperliche Achse ist gleichfalls in dem Wangenbereich 6 der feststehenden Zangenbacke 2 beziehungsweise des feststehenden Griffteils 4 gehaltert.

Das bewegliche Griffteil 5 ist um die Achse y in Richtung auf das feststehende Griffteil 4 schwenkbar, wobei eine Schwenkverlagerung des beweglichen Griffteils 5 in Richtung auf das feststehende Griffteil 4 eine gekoppelte Drehbewegung der beweglichen Zangenbacke 3 um die Achse x bewirkt.

Hierzu ist an dem beweglichen Griffteil 5 ein bevorzugt abgewinkelt verlaufender Steuerhebel 11 befestigt, der mit seinem freien Ende, in dem dargestellten Ausführungsbeispiel mit einer in diesem Bereich bevorzugt angeordneten Rolle 12, auf einen bspw. kulissenartig ausgebildeten Ausleger 13 des Schulterbereiches 8 der beweglichen Zangenbacke 3 einwirkt.

Der Steuerhebel 11 ist an dem beweglichen Griffteil 5 schwenkbeweglich gehaltert. Die diesbezügliche Schwenkachse verläuft bevorzugt parallel zur geometrischen Drehachse x.

Zwischen dem Steuerhebel 11 und dem beweglichen Griffteil 5 wirkt eine Rückstellfeder 14 bevorzugt in Form einer Schenkelfeder. Diese belastet das bewegliche Griffteil 5 in Richtung auf die in Figur 6 dargestellte Grundstellung.

In dieser Grundstellung wirkt ein sich mit Bezug zu der geometrischen Achse y des beweglichen Griffteils 5 abgewandt zu dem Griffbereich erstreckender Vorsprungbereich 15 derart auf den Schulterbereich 8 der beweglichen Zangenbacke 3 ein, dass diese in ihre anschlagbegrenzte Grundstellung gedrängt und gehalten ist.

Darüber hinaus wirkt das bewegliche Griffteil 5 über einen Lenker 16 auf eine in den Wangenbereich 6 der feststehenden Zangenbacke 2 schwenkgelagerte Schneide 17 ein. Die Lagerung der Schneide 17 erfolgt im Wangenbereich 6, wobei die diesbezügliche geometrische Achse z ebenfalls parallel verläuft zu der geometrischen Drehachse x der beweglichen Zangenbacke 3.

Die Schneide 17 liegt in einem freigeschnittenen Bereich 18 der feststehenden Zangenbacke 3 beziehungsweise des Wangenbereiches 6 frei und dient bevorzugt zum Ablängen eines Kabels, beispielsweise eines in einem weiteren Schritt abzuisolierenden Kabels.

Durch die Schwenkbewegung der Schneide 17 im Zuge der Schwenkverlagerung des beweglichen Griffteils 5 in Richtung auf das feststehende Griffteil 4 wird ein gegebenenfalls in dem Bereich 18 einliegendes Kabel unter Abstützung des Kabels an den Flanken des Wangenbereiches 6, welche den Bereich 18 begrenzen, durch die verschwenkende Schneide 17 durchtrennt.

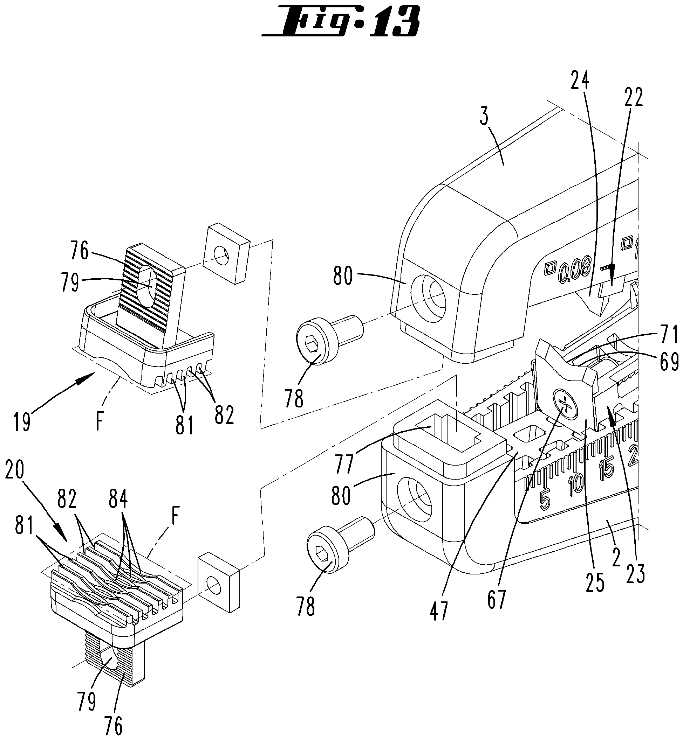

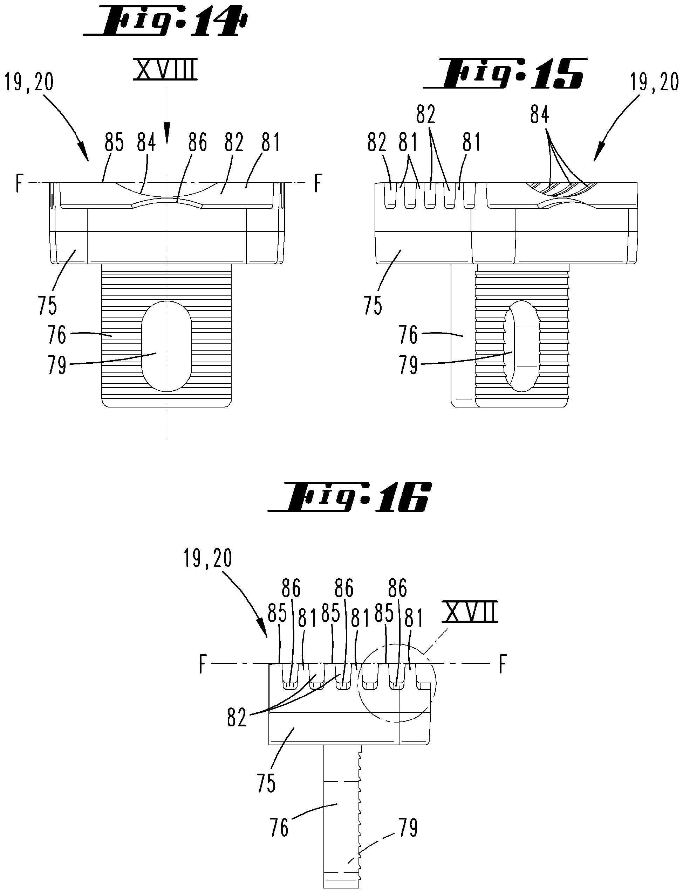

Die beiden Zangenbacken 2 und 3 weisen jeweils eine äußere Klemmbacke 19, 20 auf, zur klemmenden Erfassung eines zur Abisolierung eines freien Endes in das Zangenmaul M eingelegten Kabels 21, vergleiche auch Figuren 13 bis 16.

Darüber hinaus sind zwei, mit Bezug auf die Anordnung der Klemmbacken 19 und 20 relativ zu der geometrischen Drehachse x, innere Schneidbacken 22, 23 vorgesehen, jeweils in den Klemmbacken 19 und 20 zugewandten Endbereich festgelegten Schneiden 24, 25. Die Schneiden 24 und 25 sind aufeinander zuweisend angeordnet.

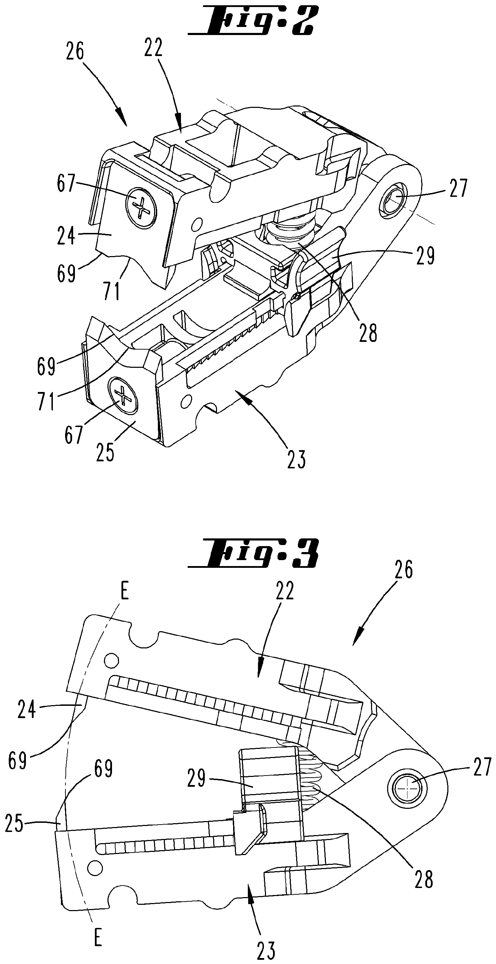

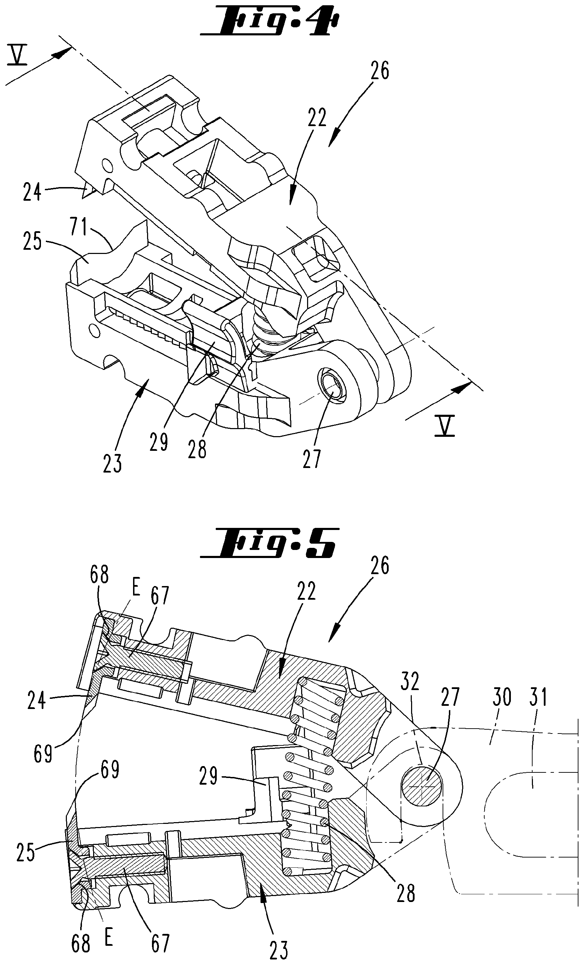

Die Schneidbacken 22 und 23, wozu in weiterer Einzelheit auch auf die Figuren 2 bis 5 verwiesen wird, sind zu einem Schneidbacken-Paar 26 zusammengefasst und im Bereich der den Schneiden 24 und 25 abgewandten Enden über eine Schwenkachse 27 miteinander verbunden, welche Schwenkachse 27 eine Relativverschwenkbarkeit der Schneidbacken 22 und 23 zueinander erlaubt.

Die geometrische Achse der Schwenkachse 27 erstreckt sich in betriebsbereiter Anordnung des Schneidbacken-Paares 26 bevorzugt in Parallelausrichtung zu der Drehachse x der beweglichen Zangenbacke 3.

Zwischen den Schneidbacken 22 und 23 ist eine Feder 28, in dem dargestellten Ausführungsbeispiel in Form einer Zylinder-Druckfeder, angeordnet, welche Feder 28 die Schneidbacken 22 und 23 in eine zueinander distanzierte Offenstellung belastet.

In dem dargestellten Ausführungsbeispiel ist an der unteren Schneidbacke 23, d.h. an der der feststehenden Zangenbacke 2 zugeordneten Schneidbacke 22 ein in Erstreckungsrichtung der Schneidbacke 22 rastfestlegbarer Anschlagschlitten 29 vorgesehen, zum Anbieten eines Anschlages für das freie, in das Zangenmaul M eingeführte Ende des Kabels 21, um hierüber die Länge des abzuisolierenden Bereiches zu definieren.

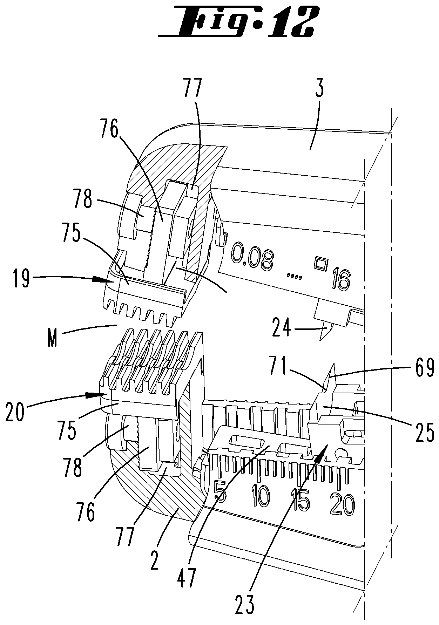

Die Schneidbacken 22 und 23 sind in der jeweils zugeordneten Zangenbacke 2, 3 seitlich geführt, vergleiche auch beispielsweise Figuren 12 und 13, zur Ermöglichung einer ordnungsgemäßen Schiebeverlagerung der Schneidbacken 22 und 23 in Richtung ihrer Längserstreckung, d.h. ausgehend von einer den Klemmbacken 19 und 20 zugeordneten Ausgangsstellung in Richtung einer zu den Klemmbacken 19 und 20 beabstandeten und in Richtung auf die Drehachse x verlagerten Endstellung und aus dieser Endstellung wieder zurück in die Ausgangsstellung.

Für diese Verlagerung der Schneidbacken 22, 23, bevorzugt des Schneidbacken-Paares 26 insgesamt, ist eine Zugstange 30 vorgesehen. Die Schneidbacken 22, 23 können im Zuge eines Zusammendrückens der Griffteile 4, 5 gegen die Kraft einer auf die Zugstange 30 wirkenden Feder 39 aus einer Ausgangsstellung in eine Endstellung verlagert werden. Die Zugstange 30 ist hierzu weiter bevorzugt von einer in einem bspw. Langloch 34 bewegbaren Zugachse 33 durchsetzt. Die Zugstange 30 weist darüber hinaus bevorzugt an ihrem griffseitigen Ende ein an der Zugstange 30 befestigtes Verschiebeteil auf. Das Verschiebeteil kann gegen die Kraft der Feder 39 relativ zu der Zugstange 30 verschiebbar sein, zur Befreiung der Zugstange 30 auf einer griffseitigen Lagerung.

Das Verschiebeteil kann insbesondere als eine Hülse 35 ausgebildet sein.

Wenn die Zugstange 30 auf der griffseitigen Lagerung befreit ist, kann die Zugstange 30 um die Zugachse 33 verschwenkbar sein. Durch eine entsprechende Verschwenkung werden die Schneidbacken 22, 23 von der Zugstange 30 frei gegeben.

Die Zugstange 30 ist auch unter unter Durchsetzung einer zugstangenseitigen, langlochartigen Ausnehmung 31 durch die körperliche Drehachse 7 geführt.

Zugeordnet der Schwenkachse 27 des Schneidbacken-Paares 26 weist die Zugstange 30 eine im Wesentlichen in Richtung auf die feststehende Zangenbacke 2, darüber hinaus im Wesentlichen in Schließ- beziehungsweise Öffnungsrichtung der Schneidbacken 22 und 23 gerichtete Einfahröffnung 32 auf. Diese ist geschaffen durch eine insgesamt hakenartige Ausgestaltung des diesbezüglichen Endbereiches der Zugstange 30.

In dieser Einfahröffnung 32 liegt in üblicher Nutzungsstellung der Abisolierzange 1 die Schwenkachse 27 des Schneidbacken-Paares 26 ein, so dass eine zufolge der langlochartigen Ausgestaltung der Ausnehmung 31 ermöglichte Schiebeverlagerung der Zugstange 30 zu einer entsprechenden Schiebeverlagerung des Schneidbacken-Paares 26 führt.

Diese Schiebeverlagerung der Zugstange 30 ist über eine Kopplung mit den am beweglichen Griffteil 5 gehalterten Steuerhebel 11 ermöglicht, welcher Steuerhebel 11 mit einer parallel zur Drehachse 7 ausgerichteten Zugachse 33, die in dem dargestellten Ausführungsbeispiel zugleich die Achse für die Rolle 12 bilden kann, in ein zugstangenseitiges Langloch 34 eingreift. Eine Mittellängslinie des Langloches 34 schließt zu einer Verlagerungsrichtung r der Zugstange 30 einen spitzen Winkel α von etwa 60 bis 85°, weiter beispielsweise etwa 75° ein.

Ein gegenüber dem insbesondere im Bereich der Drehachse 7 und der Zugachse 33 geführten Bereich abgekröpfter Abschnitt der Zugstange 30 verläuft in üblicher Nutzungsstellung der Abisolierzange 1 gegebenenfalls innerhalb des feststehenden Griffteiles 4, jedenfalls in Zuordnung zu diesem.

Im Bereich des griffseitigen Endes ist die Zugstange 30 von der genannten Hülse 35 umfasst. Diese ist bevorzugt unverlierbar an der Zugstange 30 gehaltert, dies unter Ermöglichung einer Schiebeverlagerbarkeit der Hülse 35 relativ zu der Zugstange 30. Dies ist ermöglicht zufolge eines zapfenartigen Halterungsteils 36, das den Hülsenquerschnitt durchsetzt, unter jeweils endseitiger Festlegung des zapfenförmigen Halterungsteils 36 im Bereich der Hülsenwandung 37. Das zapfenförmige Halterungsteil 36 durchsetzt hierbei die in der Hülse 35 endbereichseitig aufgenommene Zugstange 30 im Bereich eines weiteren Langlochs 38.

Innerhalb der Hülse 35 ist die Feder 39 in Form einer Zylinder-Druckfeder angeordnet, die sich einerends am Boden 40 der Hülse 35 abstützt und anderenends an einer dem Boden 40 zugewandten Schulter 41 der Zugstange 30. Entsprechend ist eine Relativverlagerung von Zugstange 30 und Hülse 35 in Richtung der Hülsenlängsachse entgegen der Kraft der Feder 39 ermöglicht.

Die Hülse 35 ist zusammen mit dem zugeordneten Endbereich der Zugstange 30 in dem dargestellten Ausführungsbeispiel in einer griffinnenseitigen Höhlung 42 aufgenommen, wobei sich die Hülse 35 im betriebsbereiten Zustand der Abisolierzange 1 über eine über den Boden 40 hinausragende zapfenförmige Erweiterung an einem Höhlungsboden 43 abstützen kann.

Darüber hinaus weist die Hülse 35 einen Rastvorsprung 44 auf, zum Eingriff in eine an dem Griffteil 4, insbesondere im Bereich der Höhlung 42 ausgebildete Rastausnehmung 45.

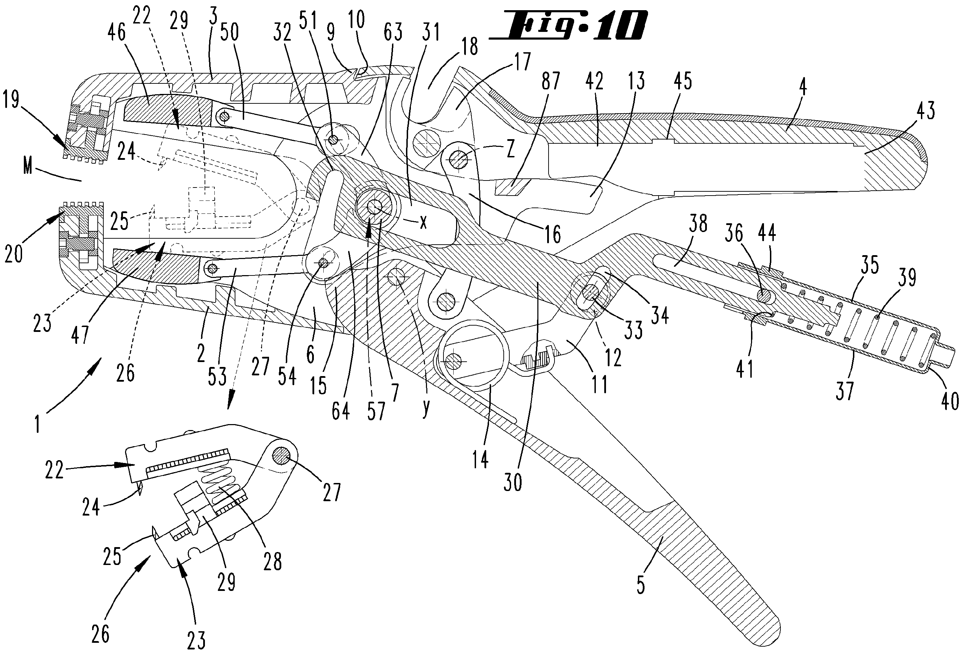

Die Zugstange 30 kann zufolge der vorbeschriebenen Anordnung und Ausgestaltung der abgefederten Hülse 35 aus der griffteilseitigen Lagerung befreit werden (vergleiche Figur 10). Hiernach kann, wie auch schon weiter oben ausgeführt, die Zugstange 30 um die Drehachse 7 geschwenkt werden, was zudem auch durch die in dem Langloch 34 der Zugstange 30 geführte Zugachse 33 ermöglicht ist. Zufolge dieser Schwenkverlagerung der Zugstange 30 in Richtung auf das bewegliche Griffteil 5 wird ein Aufschwenken des die Einfahröffnung 32 aufweisenden freien Endes der Zugstange 30 bewirkt, zur Freigabe der Schwenkachse 27 des Schneidbacken-Paares 26. Darüber hinaus kann gegebenenfalls überlagert zu der Aufschwenkbewegung der Zugstange 30 eine Linearbewegung, geführt durch die in der langlochartigen Ausnehmung 31 eingreifenden Drehachse 7, gegeben sein. Hierbei wird der über die Zugachse 33 mitgeschleppte Steuerhebel 11 entgegen der Kraft der Rückstellfeder 14 schwenkverlagert.

In der aufgeschwenkten und gegebenenfalls schiebeverlagerten Stellung der Zugstange 30 gemäß der Darstellung in Figur 10 kann in handhabungstechnisch günstiger Weise eine Entnahme des Schneidbacken-Paares 26 erfolgen, bevorzugt unter Durchführen einer Schwenkbewegung der Schneidbacken 22 und 23 in Richtung auf eine Schließstellung entgegen der die Schneidbacken 22 und 23 belastenden Feder 28.

Auch ist nach einem Wiedereinsetzen eines Schneidbacken-Paares 26 die ordnungsgemäße Betriebsstellung der Abisolierzange 1 in handhabungstechnisch günstiger und werkzeugloser Weise einnehmbar.

Die Schneidbacken 22 und 23 sind in Richtung auf eine Schließstellung entgegen einer die Schneidbacken 22 und 23 in eine beispielsweise in Figur 6 dargestellte Offenstellung belastende Feder 28 bei einem Zusammenführen der Griffschenkel 4 und 5 aufeinander zu bewegbar.

Die Schneidbacken 22 und 23 sind weiter als Paar zusammengefasst herausnehmbar, zum Auswechseln. In weiterer Einzelheit sind die Schneidbacken 23 und 23 über eine Schwenkachse 27, die auch bevorzugt als Achsstift ausgebildet ist, miteinander schwenkbar verbunden.

Jede Schneidbacke 22, 23 stützt sich in der zugeordneten Zangenbacke 2, 3 über ein Kulissenteil 46, 47 ab, welches Kulissenteil 46, 47 sich wiederum an einer klemmbackenfesten Kulisse 48, 49 abstützt.

Diese mittelbare Abstützung der Schneidbacken 22, 23 an der jeweiligen Zangenbacke 2, 3 ist aus der eingangs erwähnten EP 1 557 920 B1 bekannt. Es wird bezüglich der Wirkungsweise auch auf den Inhalt dieser Patentschrift verwiesen.

Das gleitkeilartige Kulissenteil 46 beziehungsweise 47 ist geeignet zur Verlagerung entlang der backenseitig gleitkeilflächenartig ausgebildeten Kulisse 48 beziehungsweise 49. Die Radien der miteinander wirkenden Flächen von Kulissenteil 46, 47 und Kulisse 48, 49 sind einander angepasst. Insgesamt ist eine Schiebeverlagerbarkeit der Kulissenteile 46 und 47 im Wesentlichen in Verschieberichtung r der Zugstange 30 und des Schneidbacken-Paars 26 gegeben.

Das in der beweglichen Zangenbacke 3 geführte Kulissenteil 46 ist bevorzugt über eine Koppelstange 50 mit dem Wangenbereich 6 der feststehenden Zangenbacke 2 beziehungsweise des feststehenden Griffteils 4 verbunden, dies über eine endseitig der Koppelstange 50 vorgesehene erste Achse 51, die in dem Wangenbereich 6 in einem ersten Langloch 52 geführt ist.

Auch das in der feststehenden Zangenbacke 2 geführte Kulissenteil 47 kann eine Koppelstange 53 aufweisen, die endseitig eine zweite Achse 54 tragen kann, zum Eingriff in ein im Schulterbereich 8 der beweglichen Zangenbacke 3 vorgesehenes zweites Langloch 55.

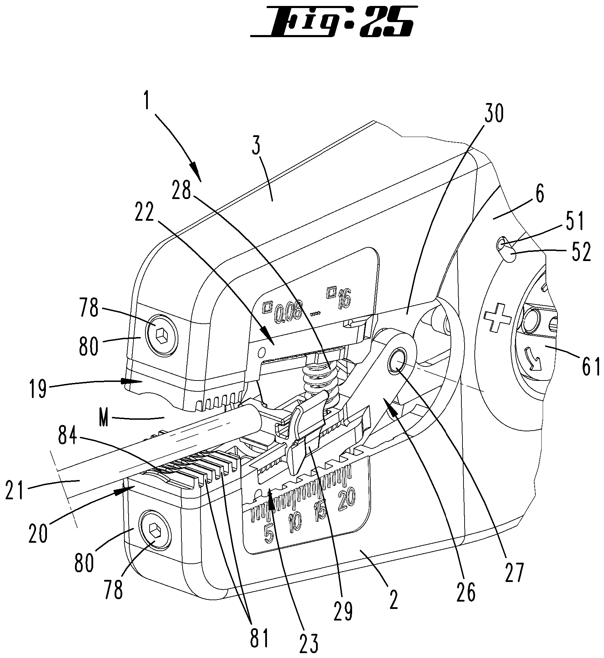

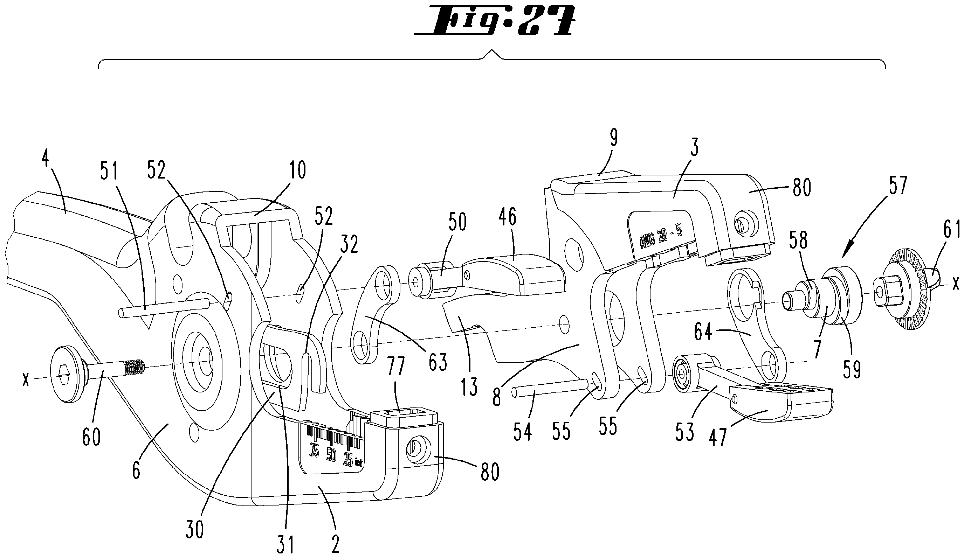

Mit Bezug auf eine Grundstellung beispielsweise gemäß der Darstellung in Figur 6 sind die Langlöcher 52 (siehe auch Figur 25) und 55 (siehe auch Figur 27) mit Bezug auf eine Projektion derselben in Richtung der geometrischen Drehachse x in eine senkrecht zur Drehachse x ausgerichteten Ebene so ausgerichtet, dass diese zu der Verschieberichtung r im Wesentlichen jeweils einen spitzen Winkel von etwa 45° einschließen, wobei beide Langlöcher 52 und 55 im Wesentlichen in Richtung auf die Drehachse x geneigt verlaufen.

Zufolge der vorbeschriebenen Anordnung der Kulissenteile 46 und 47 in Zusammenwirkung mit den backenseitigen Kulissen 48 und 49, wie auch weiter zufolge der Anbindung der Kulissenteile 46 und 47 über die Koppelstangen 50 und 53 an einem Bereich der im Wesentlichen gegenüberliegenden Zangenbacke ist bei dem Ausführungsbeispiel eine selbsttätige (automatische) Schneidtiefenanpassung in Abhängigkeit von dem Kabel-Außendurchmesser gegeben.

Es ergeben sich in Abhängigkeit von dem Durchmesser beziehungsweise der Dicke des zwischen den Klemmbacken 19 und 20 zu erfassenden Kabels 21 bei entsprechendem Zusammendrücken der Griffteile 4 und 5 unterschiedliche Schneidtiefen der Schneiden 24 und 25 der Schneidbacken 22 und 23, da in Abhängigkeit mit der erfassten Kabeldicke und der damit einhergehenden Beabstandung der Klemmbacken 19 und 20 und hierüber der Zangenbacken 2 und 3 eine Schiebeverlagerung der Kulissenteile 46 und 47 entlang der Kulissen 48, 49 einhergeht, demzufolge sich der Abstützpunkt für die Schneidbacken 22 und 23 an den Kulissenteilen 46 und 47 ändert. Die Kulissenteile 46 und 47 werden in Abhängigkeit von der Kabeldicke in gleichem Maße in beziehungsweise entgegen der Verschieberichtung r über die Koppelstangen 50 und 53 verlagert.

Die Einstellung der Schnitttiefe erfolgt dadurch, dass bei einem Zusammendrücken der Griffteile 4 und 5 und hierüber der Zangenbacken 2 und 3 und der damit verbundenen Auslenkung der beweglichen Zangenbacke 3 um die Drehachse 7 das untere Kulissenteil 47 in der feststehenden Zangenbacke 2 über die mit der beweglichen Zangenbacke 3 verbundene Koppelstange 53 leicht von der Maulspitze weggezogen wird. Dabei wird das Kulissenteil 47 um einen Betrag verschoben. Durch diese Verschiebung wird die zugeordnete Schneidbacke 23 um einen Zustellbetrag geschlossen und zugleich die Winkellage des Kulissenteiles 47 verändert.

Synchron hierzu erfolgt über das über die Koppelstange 50 mit der feststehenden Zangenbacke 2 verbundene Kulissenteil 46 eine Auslenkung der beweglichen Zangenbacke 3, so dass eine Relativbewegung des Kulissenteils 46 gegenüber der zugeordneten Kulisse 48 in gleicher Richtung wie bei dem Kulissenteil 47 erfolgt. So erfolgen auch hier eine Zustellbewegung der zugeordneten Schneidbacke 22 senkrecht zur Längsverschiebung und die Lagekorrektur des Kulissenteils 46.

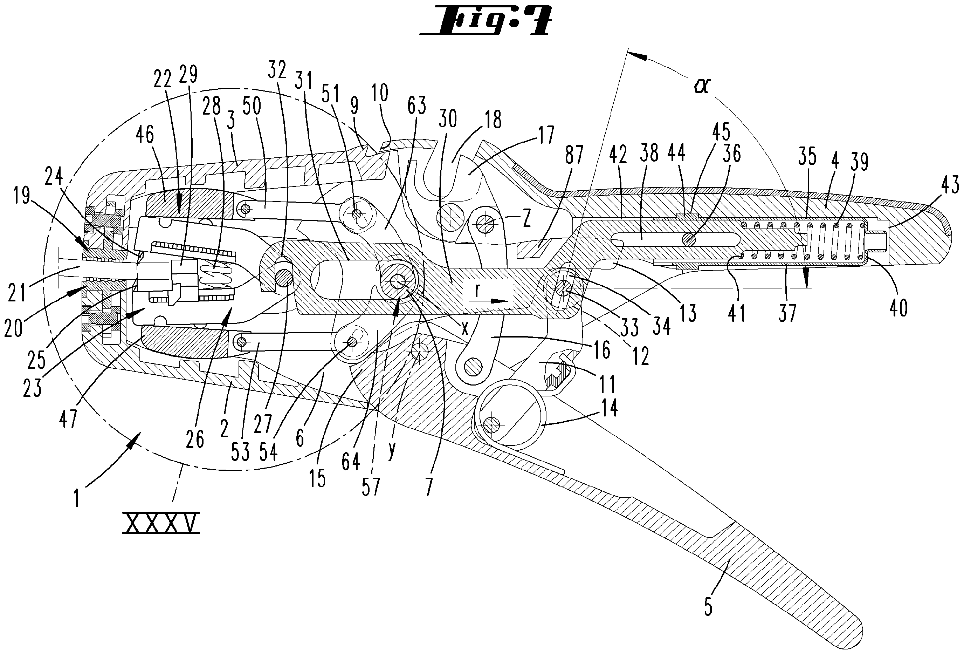

Im Zuge des Zusammendrückens der Griffteile 4 und 5 wird zunächst ein Schließen des Zangenmauls M zufolge entsprechender Schwenkverlagerung der beweglichen Zangenbacke 3 unter Überlagerung einer Schließung des Schneidbacken-Paares 26 durchgeführt (vergleiche Figur 7). Die Schneiden 17 der Schneidbacken 22 und 23 schneiden in den Isolationsmantel des Kabels 21 ein, dies mit einer Einschnitttiefe, die gemäß der vorbeschriebenen Ausgestaltung in Abhängigkeit von der Kabeldicke sich automatisch einstellt.

Die Schwenkverlagerung der beweglichen Zangenbacke 3 ist erreicht zufolge einer entsprechenden Beaufschlagung der an dem Steuerhebel 11 angeordneten Rolle 12 an einer zugewandten, in der Grundstellung der Abisolierzange 1 in etwa in Verschieberichtung r ausgerichteten Steuerfläche des Auslegers 13.

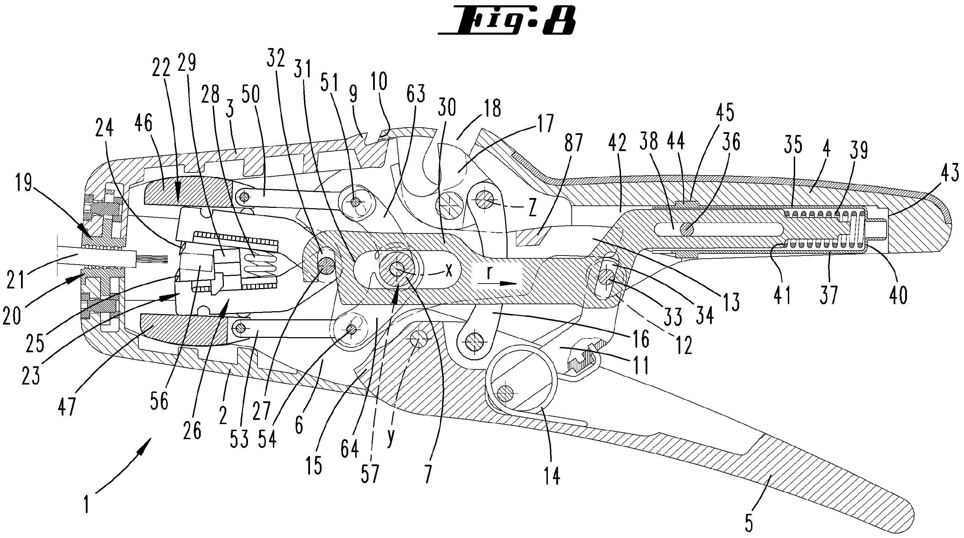

Bei weiterer Schwenkverlagerung des beweglichen Griffteiles 5 in Richtung auf den feststehenden Griffteil 4 gemäß der Darstellung in Figur 8 gleitet die Rolle 12 des Auslegers 13 entlang der zugewandten und vorbeschriebenen Stirnfläche des Auslegers 13 unter Überwindung der Rückstellkraft der in der Hülse 35 auf die Zugstange 30 einwirkenden Feder 39. Die Zugstange 30 wird linear in Verschieberichtung r gezogen, unter Mitschleppung des Schneidbacken-Paars 26. Hierdurch erfolgt das Abstreifen des durch Einschneiden mittels der Schneiden 17 separierten Isolationsabschnittes 56 vom Leiter.

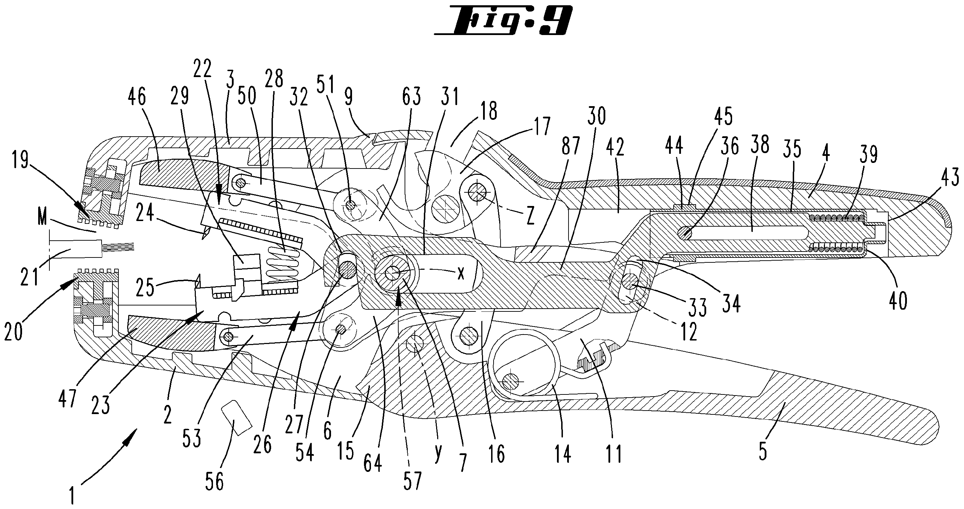

Gemäß der Darstellung in Figur 9 verlässt die auslegerseitige Rolle 12 bei einem weiteren Zusammendrücken der Griffteile 4 und 5 die abstützende Stellung zu dem Ausleger 13 der beweglichen Zangenbacke 3, welche zurück in Richtung auf ihre Offen-Grundstellung verschwenkt, unter gleichzeitiger Öffnung des Zangenmauls M, wie auch des Schneidbacken-Paares 26. Dies unter anderem bedingt durch die Rückstellkraft der zwischen den Schneidbacken 22 und 23 vorgesehenen Feder 28.

Das endseitig abisolierte Kabel 31 liegt zur Entnahme aus der Abisolierzange 1 frei. Der abgetrennte und abgezogene Isolationsabschnitt 56 liegt zur Entnahme frei oder fällt gegebenenfalls selbsttätig aus dem Zangenmaul M.

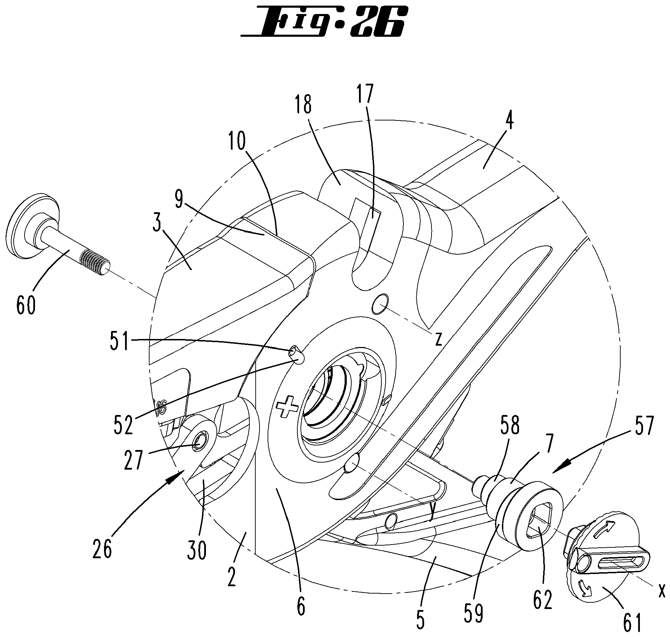

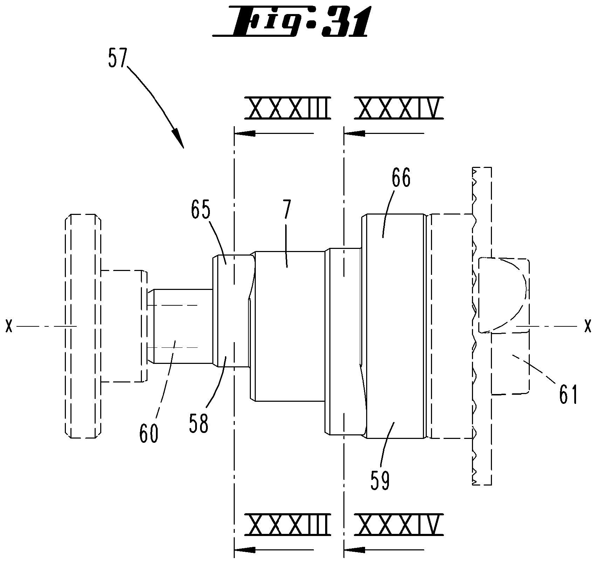

Zur Ermöglichung einer Justierung der automatischen Schneidtiefenanpassung der Schneiden 24 und 25 der Schneidbacken 22 und 23 kann ein zentrales Verstellmittel vorgesehen sein. Dieses kann, wie beispielhaft in Figur 26 dargestellt, ein einstückig ausgebildetes Exzenterteil 57 sein mit zwei in Achsrichtung des Exzenterteils 57 zueinander beabstandeten Exzentern 58 und 59. Weiter wird hierzu auf die Figuren 31 bis 34 verwiesen.

Weiter kann das Exzenterteil 57, wie auch dargestellt, die Drehachse 7 bilden, insbesondere durch einen zwischen den Exzentern 58 und 59 gebildeten, im Querschnitt kreisrunden und konzentrischen Exzenterteilbereich.

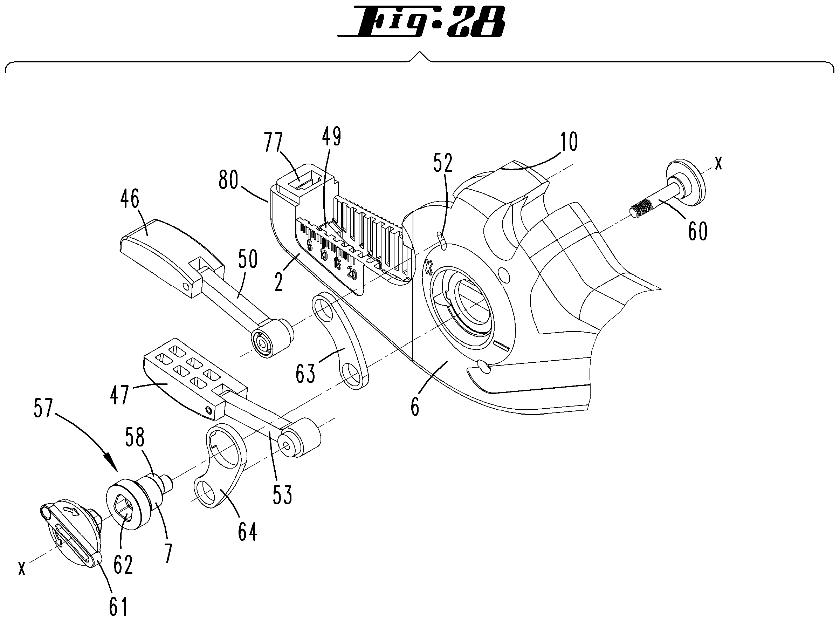

Das Exzenterteil 57, vergleiche auch Figur 28, kann hohlwellenartig gebildet sein, zum Durchsatz einer zentralen, massiven Welle. Diese kann weiter gebildet sein durch einen Schraubbolzen 60, über welchen das Exzenterteil 57 an dem Wangenbereich 6 der feststehenden Zangenbacke 2 drehhalterbar ist. Der Schraubbolzen 60 stützt sich hierbei endseitig mit einem Kragen wangenseitig ab. Diesem Kragen in Achsrichtung gegenüberliegend erfolgt eine Verschraubung mit einer von außen zugänglichen, tellerförmigen Handhabe 61, welche mit einem, wie dargestellten, Vierkant-Fortsatz drehfest in eine entsprechend ausgebildete koaxiale Ausnehmung 62 des Exzenterteils 57 eingreift. Eine Drehverlagerung der Handhabe 61 um die geometrische Drehachse x führt entsprechend zu einer Drehverlagerung des Exzenterteils 57 insgesamt. Es kann eine Rastdrehverlagerung gegeben sein.

Der bezüglich des die Drehachse 7 ausformenden Mittelbereichs des Exzenterteils 57 der Handhabe 61 zugewandte zweite Exzenter 59 kann insgesamt, d.h. auch bezüglich der nockenartigen Erweiterung, durchmessergrößer ausgebildet sein als der die Drehachse 7 bildende Abschnitt, während der weitere, entfernt zu der Handhabe 61 ausgebildete erste Exzenter 58 gegenüber dem mittleren, die Drehachse 7 bildenden Bereich durchmesserkleiner ausgebildet sein kann.

Die Exzenter 58 und 59 wirken über erste und zweite Lenker 63, 64 auf die erste beziehungsweise zweite Achse 51, 54 der Koppelstangen 50, 53 (siehe

Figuren 30, 35 und 36).

Die Justierung der auch durch diese Ausgestaltung weiterhin gegebene automatische Schneidtiefeneinstellung erfolgt zufolge Verdrehen der Handhabe 61, was entsprechend über die formschlüssige Verbindung zu einer Drehverlagerung der Exzenter 58 und 59 führt, weiter entsprechend zu einer Verlagerung der exzentrisch gegenüber der geometrischen Drehachse x im Querschnitt vorgewölbten Steuerbereiche 65, 66 um den jeweiligen Winkelbetrag.

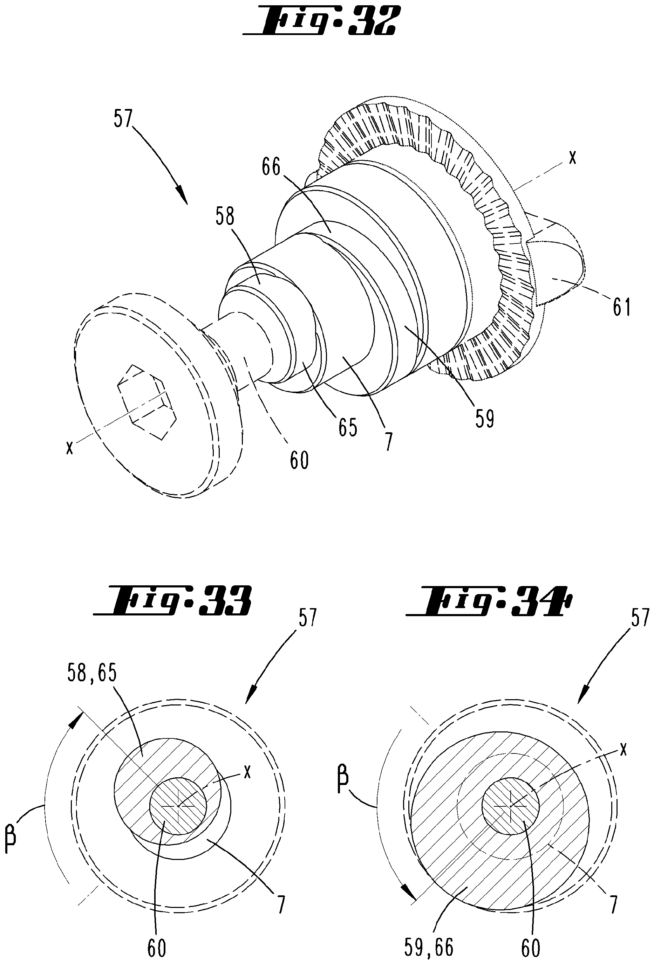

Wie aus den Schnittdarstellungen in den Figuren 33 und 34 zu erkennen, können gemäß dem dargestellten Ausführungsbeispiel die Steuerbereiche 65 und 66 der Exzenter 58 und 59 mit Bezug auf die geometrische Drehachse x um einen Winkel β von etwa 90° zueinander versetzt angeordnet sein.

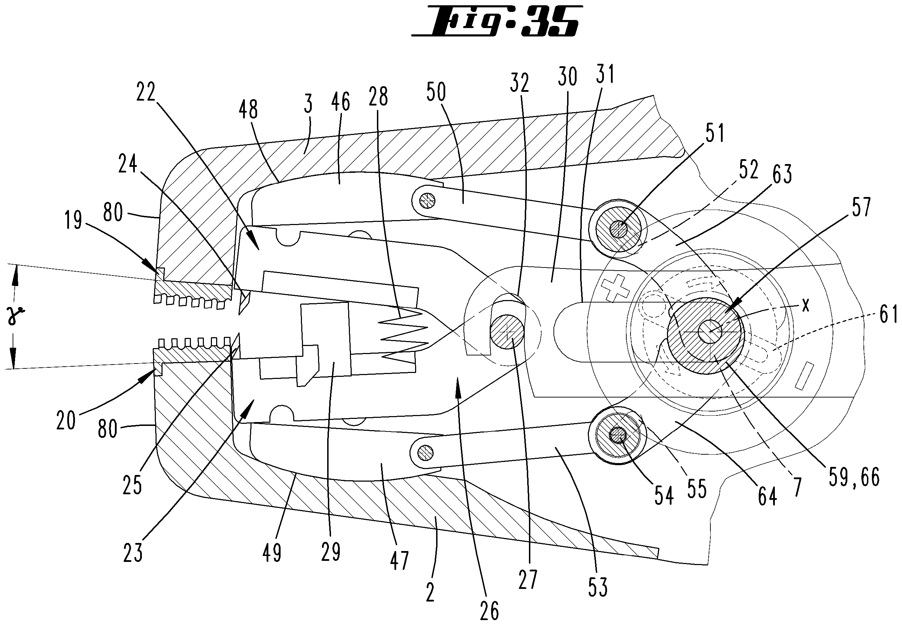

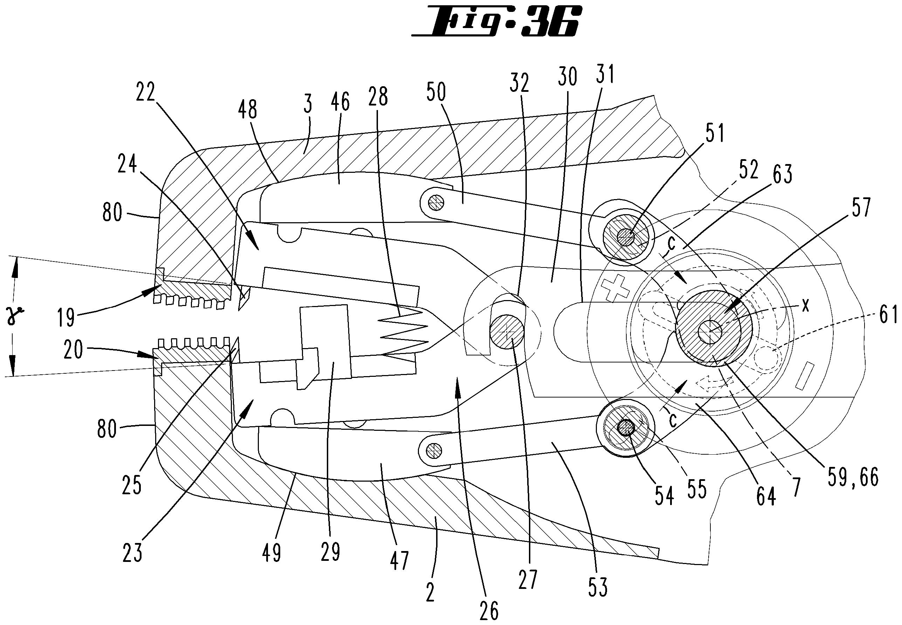

Zufolge Verdrehen der Handhabe 61 und damit einhergehendem Verdrehen der Exzenter 58 und 59 um die geometrische Drehachse x ist eine gleichmäßige und gleichgerichtete Verlagerung der ersten und zweiten Achse 51, 54 beider Koppelstangen 50 und 53 in den zugeordneten ersten und zweiten Langlöchern 52, 55 erreichbar (siehe Pfeile c). In Figur 36 ist eine gegenüber der Stellung in Figur 35 um 180° verdrehte Handhaben-Stellung gezeigt. Entsprechend sind die Steuerbereiche 65 und 66 der Exzenter 58 und 59 in eine mit Bezug zu der geometrischen Drehachse x gegenüberliegende Stellung verdreht, unter entsprechender Schleppmitnahme der zugeordneten Lenker 63 und 64. Letztere umfassen in einer möglichen Ausgestaltung die umlaufende Stirnfläche des jeweiligen Exzenters.

Die Achsen 51 und 54 sind gemäß dem Beispiel um etwa das halbe Erstreckungsmaß des jeweils zugeordneten Langlochs 52, 55 in dem Langloch 52, 55 verlagert, unter entsprechendem Mitschleppen der an den Achsen 51 und 54 angebundenen Koppelstangen 50 und 53 sowie der abschließend vorgesehenen Kulissenteile 46 und 47.

Im Falle der Anordnung einer so ausgebildeten Verstellmittel-Anordnung kann über die Handhabe 61 und entsprechend über die Exzenter 58 und 59 die Winkellage der Kulissenteile 46 und 47 und die Relativlage derselben zu der jeweiligen Kulisse 48, 49 bezüglich der Grundausrichtung in der Zangenmaul-Offenstellung eingestellt werden, aus welcher Grundstellung heraus im Zuge der üblichen Nutzung der Abisolierzange 1 eine weitere automatische Anpassung an die Kabeldicke erfolgen kann.

Gemäß den Darstellungen in den Figuren 35 und 36 kann eine beispielhafte Verstellung der Exzenter 58 und 59 um 180° zur Justierung der automatischen Schneidtiefeneinstellung eine in diesen Darstellungen gezeigte Öffnung der Schneidbacken 22 und 23 bezüglich eines Öffnungswinkels γ um ein Viertel bis ein Achtel, weiter beispielsweise etwa einem Sechstel des Winkelmaßes vergrößern.

Die Relativanordnung der ersten und zweiten Achse 51, 54 in den zugeordneten Langlöchern 52 und 55 ist hierbei unabhängig von einer Schwenkstellung der Klemmbacken 19, 20 beziehungsweise der Zangenbacken 2 und 3.

Die Abisolierzange 1 kann mit nachfolgend näher beschriebenen Klemmbacken 19 und 20 und/oder nachstehend näher beschriebenen Schneiden 17 versehen sein.

Die Schneiden 24, 25 der Schneidbacken 22, 23 können über stirnseitig zu bedienende Schrauben 67 an der jeweiligen Schneidbacke 22 beziehungsweise 23 festlegbar sein.

Hierzu kann jede zumindest im Wesentlichen plattenförmig gebildete Schneide 24, 25 eine von der jeweiligen Schraube 67 zu durchsetzende Bohrung 68 aufweisen.

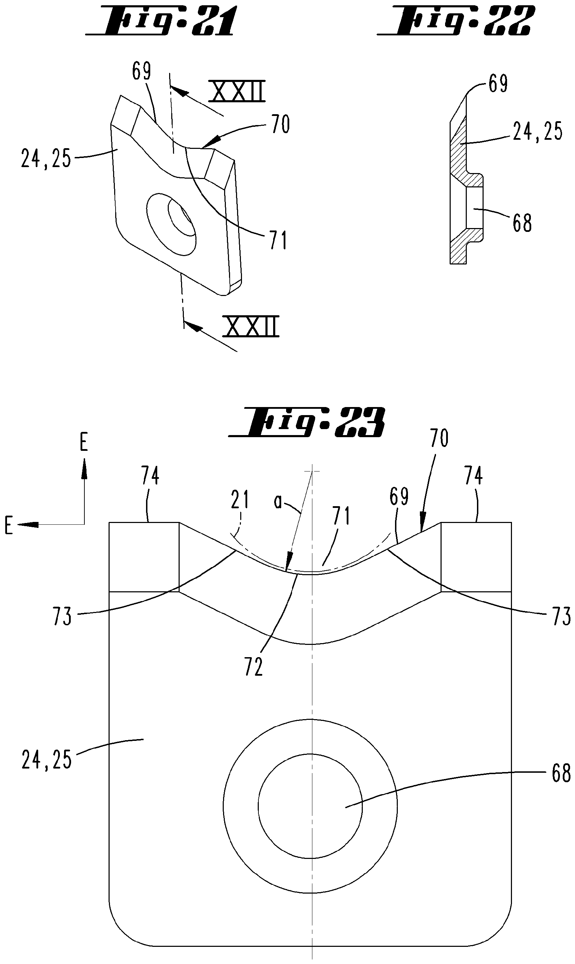

Die Schneide 24, 25 weist eine im Nutzungszustand in Richtung auf das Zangenmaul M weisende Schneidenspitze 69 auf, mit einem im Querschnitt gemäß der Darstellungen in den Figuren 21 und 22 in einem spitzen Winkel auslaufenden Ende, das in einer Seitenansicht gemäß Figur 23 eine Konturlinie 70 bildet. In der Seitenansicht gemäß Figur 23 bildet die Konturlinie 70 zugleich eine Abschlusslinie der Schneide 17.

Die Konturlinie 70 kann eine Einsenkung 71 aufweisen. Diese erscheint in einem in Längserstreckung der Konturlinie 70 betrachteten mittigen Bereich als stetig gekrümmte Linie (gekrümmter Bereich 72), bevorzugt einer Kreislinie, mit einem Radius a, an die sich bevorzugt beidseitig unter Fortsetzung der Umschließung eines eingelegten Kabels 21 eine Linie beziehungsweise Abschnitt 73 mit geringerer Krümmung anschließt. Gemäß dem dargestellten Ausführungsbeispiel kann diese sich an die mittige gekrümmte Linie anschließende Linie beidseitig der Krümmung eine Gerade sein, so dass sich insgesamt eine im Wesentlichen V-förmige Einsenkung 71 der Konturlinie 70 ergibt, mit einer entsprechend mit dem Radius a verrundeten V-Spitze.

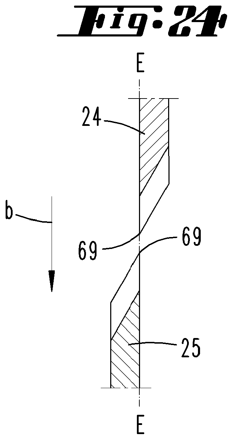

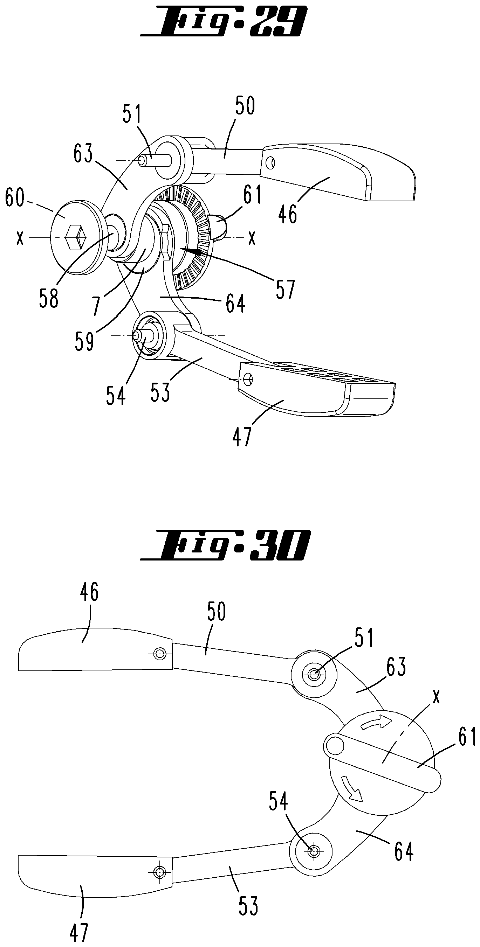

Die sich an die verrundete Kontur im Bereich 72 anschließende Konturlinie im Abschnitt 73 kann sich, bezogen auf eine Schneidrichtung b einer Schneidebene E in Richtung der Schneidrichtung b fortsetzen (vergleiche Figur 24). Sie steigt entsprechend beim Ausführungsbeispiel und mit Bezug zu Fig. 29 ausgehend von der Einsenkung in der Schneidrichtung b nach oben an bzw. fällt nach unten ab.

Die Einsenkung 71 begrenzend setzt sich die Konturlinie 70 bevorzugt beidseitig der Einsenkung 71 fort in gerade verlaufende Abschnitte 73, 74, die entsprechend einer gemeinsamen, quer zur Schneidrichtung b verlaufenden Gerade verlaufen können.

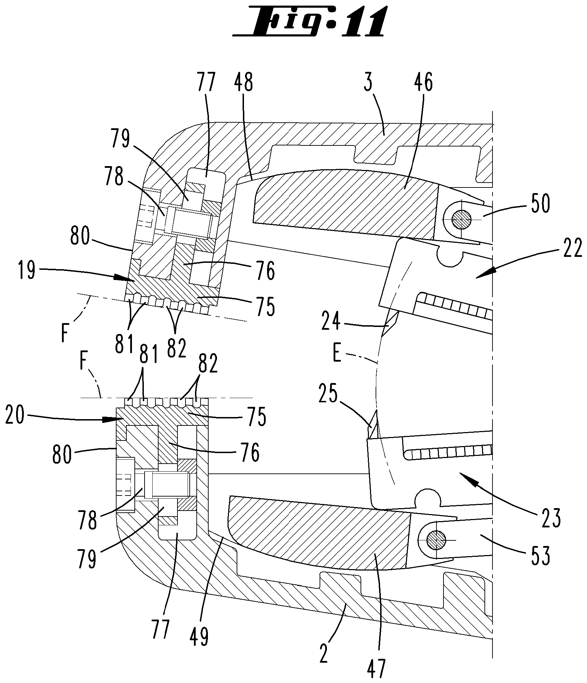

Die Konturlinie 70 setzt sich hierbei auch in einer Ebenenerstreckung der - in Strenge gekrümmt verlaufenden, siehe Figuren 3 und 11 - Schneidebene E fort, vergl. Fig. 23. Die Konturlinie 70 erstreckt sich damit auch in der Breite und der Höhe und zwar bevorzugt relativ weniger stark in der Höhe als im Bereich der verrundeten Kontur und relativ stark in der Breite als im Bereich der verrundeten Kontur.

Jede Klemmbacke 19 beziehungsweise 20 kann, wie dargestellt, zunächst einen plattenförmigen Grundkörper 75 aufweisen, mit zwei gegenüberliegenden Breitseitenflächen. Von einer Breitseitenfläche ragt bei etwa mittiger Anordnung ein Befestigungsfortsatz 76 senkrecht ab. Dieser kann plattenartig gebildet sein mit einer im Einbauzustand quer zu einer Ausrichtung eines zu ergreifenden Kabels 21 zwischen den Klemmbacken 19 und 20 sich erstreckenden Plattenebene.

Mittels des Befestigungsfortsatzes 76 ist eine Befestigung der Klemmbacke 19 beziehungsweise 20 an der zugeordneten Zangenbacke 2 beziehungsweise 3 ermöglicht, zufolge Einschub des Befestigungsfortsatzes 76 in eine entsprechend ausgebildete Aufnahmetasche 77 der Zangenbacke 2, 3.

Die Festlegung an der Zangenbacke 2, 3 erfolgt zufolge einer Verschraubung. Die diesbezügliche Befestigungsschraube 78 durchsetzt hierzu eine entsprechende Bohrung in der Zangenbacke 2, 3 sowie ein Langloch 79 in dem Befestigungsfortsatz 76, wobei die Schraubbefestigung der Klemmbacke 19, 20 von einer Stirnfläche 80 der jeweiligen Zangenbacke 2, 3 aus erfolgt.

Beide Klemmbacken 19 und 20 sind bezüglich der in Einbausituation aufeinander zu weisenden Breitseiten der Grundkörper 75 mit quer zu einem zwischen die Klemmbacken 19 und 20 klemmzuhalternden Kabel 21 verlaufenden Rippen 81 versehen. Zwischen diesen Rippen 81 verlaufen nutartige Ausnehmungen 82 mit jeweils einem Ausnehmungsboden 83.

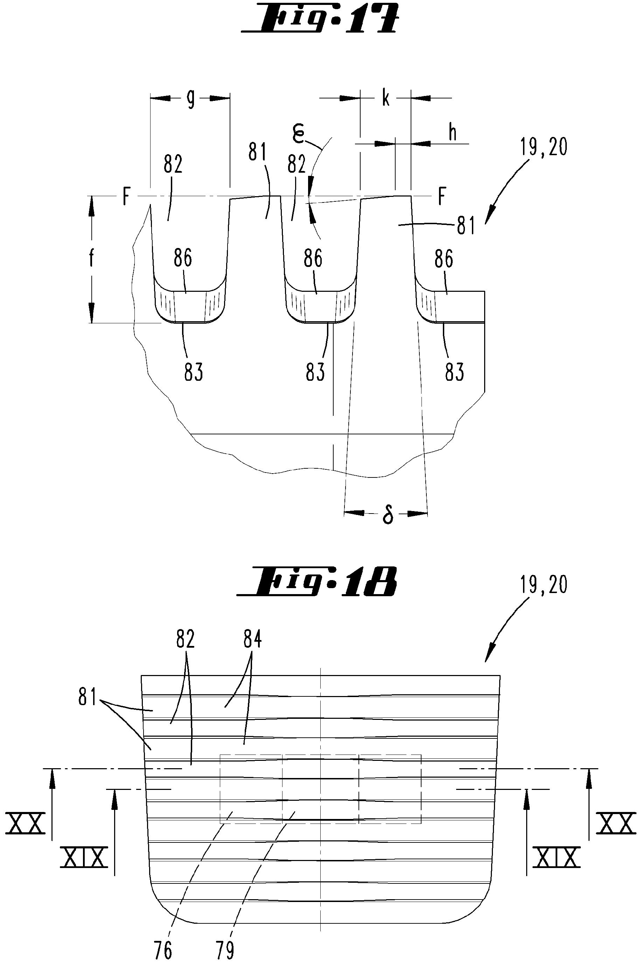

Gemäß dem dargestellten Ausführungsbeispiel, und bevorzugt, können je Klemmbacke 19, 20 beispielsweise sechs solcher Rippen 81 vorgesehen sein, die quer zur Längserstreckung der Rippen 81 betrachtet gleichmäßig zueinander beabstandet sind, vergleiche auch Figur 18. Weiter sind die Rippen 81 so angeordnet, dass diese, in Abhängigkeit von einer Dicke des zu klemmenden Kabels 21, aber auch ohne Einlegen eines Kabels 21, kammartig in die Ausnehmungen 82 der gegenüberliegenden Klemmbacke einfahren können.

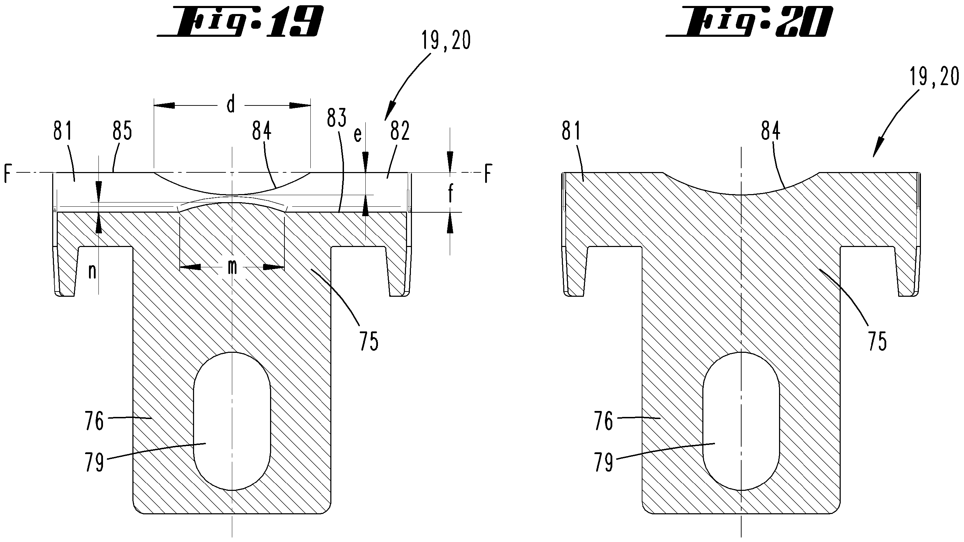

Alle Rippen 81 beider Klemmbacken 19 und 20 können, wie dargestellt, auf einem Teil ihrer Längserstreckung, weiter bevorzugt mittig ihrer Längserstreckung, eine konkave Ausbuchtung 84 aufweisen. Hieraus ergibt sich bei bevorzugt in einer Längserstreckung eines eingelegten Kabels betrachtet fluchtender Anordnung der Ausnehmungen 84 und über alle Rippen 81 betrachtet eine im Wesentlichen mittige wannenförmige Senke - im Sinne einer Hüllfläche über die Konturlinien der Ausbuchtungen in der genannten Längserstreckung - bezüglich der in Richtung auf das Zangenmaul M weisenden Rippenoberfläche 85. Hierzu wird auch auf die Figuren 19 und 20 verwiesen.

Die Rippenoberfläche 85 beidseitig der Ausbuchtungen 84 spannen insgesamt eine ebene Klemmfläche F auf.

Die in Erstreckungsrichtung einer Rippe 81 betrachtete Breite d einer Ausbuchtung 84 kann etwa dem halben Rippenlängserstreckungsmaß entsprechen. Die senkrecht zum Breitenmaß d betrachtete Tiefe e einer Ausbuchtung 84 kann etwa der halben maximalen, in selber Richtung betrachteten größten Tiefe f einer Ausnehmung 82 entsprechen.

Auch kann die größte Tiefe f einer Ausnehmung 82 in dem dargestellten Ausführungsbeispiel etwa dem 1,5-Fachen des quer zur Rippenlängserstreckung betrachteten freien Abstandes g zwischen zwei benachbarten Rippen 81 im Bereich ihrer Rippenoberfläche 85 entsprechen (vergleiche Figur 17).

Zudem kann jede Rippe 81, bezogen auf einen Querschnitt quer zur Längserstreckung der Rippe 81, ausgehend von dem Ausnehmungsboden 83 sich in Richtung zur Rippenoberfläche 85 konisch verjüngen. So können die, die Ausnehmung 82 begrenzenden Rippenaußenflächen zueinander einen Konuswinkel δ von etwa 15° einschließen.

Die Rippenoberfläche 85 einer jeden Rippe 81 kann sich mit Bezug quer zu einer Längserstreckung der Rippe 81 über einen Teilbereich in einer die Klemmfläche F definierenden Ebene erstrecken, so beispielsweise gemäß der Darstellung in Figur 17 über eine Länge h, die etwa einem Drittel der in die Klemmfläche F projizierten Gesamtlänge k entsprechen kann. Der über die Länge h hinausgehende Abschnitt der Rippenoberfläche 85 kann gemäß der in Figur 17 gezeigten Ausführungsform unter einem Winkel ε von etwa 5° abfallen.

Der Ausnehmungsboden 83 kann über die Länge der Ausnehmung 82 unterschiedlich tief ausgebildet sein, entsprechend unterschiedliche Maße f aufweisen. So kann, wie auch dargestellt, im Bereich der Ausbuchtung 84 ausnehmungsbodenseitig eine kuppelartige Erhöhung 86 vorgesehen sein mit einer in Längserstreckung der Ausnehmung 82 betrachteten Breite m, die etwa einem Drittel der Gesamtlänge der Ausnehmung 82 beziehungsweise einer Rippe 81 entsprechen kann und einer Höhe n über das Niveau des sich an die Erhöhung 86 anschließenden Bereichs des Ausnehmungsbodens 83, welche Höhe n etwa einem Drittel bis einem Fünftel der größten Tiefe f der Ausnehmung 82 entsprechen kann.

Die Anordnung und die Abmaße von Ausbuchtung 84 und Erhöhung 86 können weiter so gewählt sein, dass selbst im Bereich der Erhöhung 86 die Ausbuchtung 84 nicht den Ausnehmungsboden 83 erreicht.

**Liste der Bezugszeichen**

| | | | |
|---|---|---|---|
| 1 | Abisolierzange | 29 | Anschlagschlitten |
| 2 | feststehende Zangenbacke | 30 | Zugstange |
| 3 | bewegliche Zangenbacke | 31 | Ausnehmung |
| 4 | feststehendes Griffteil | 32 | Einfahröffnung |
| 5 | bewegliches Griffteil | 33 | Zugachse |
| 6 | Wangenbereich | 34 | Langloch |
| 7 | Drehachse | 35 | Hülse |
| 8 | Schulterbereich | 36 | Halterungsteil |
| 9 | Vorsprungbereich | 37 | Hülsenwandung |
| 10 | Abstützfläche | 38 | Langloch |
| 11 | Steuerhebel | 39 | Feder |
| 12 | Rolle | 40 | Boden |
| 13 | Ausleger | 41 | Schulter |
| 14 | Rückstellfeder | 42 | Höhlung |
| 15 | Vorsprungbereich | 43 | Höhlungsboden |
| 16 | Lenker | 44 | Rastvorsprung |
| 17 | Schneide | 45 | Rastausnehmung |
| 18 | freigeschnittener Bereich | 46 | Kulissenteil |
| 19 | Klemmbacke | 47 | Kulissenteil |
| 20 | Klemmbacke | 48 | Kulisse |
| 21 | Kabel | 49 | Kulisse |
| 22 | Schneidbacke | 50 | Koppelstange |
| 23 | Schneidbacke | 51 | erste Achse |
| 24 | Schneide | 52 | erstes Langloch |
| 25 | Schneide | 53 | Koppelstange |
| 26 | Schneidbacken-Paar | 54 | zweite Achse |
| 27 | Schwenkachse | 55 | zweites Langloch |
| 28 | Feder | 56 | Isolationsabschnitt |
| 57 | Exzenterteil | 84 | Ausbuchtung |
| 58 | erster Exzenter | 85 | Rippenoberfläche |
| 59 60 | zweiter Exzenter Schraubbolzen | 86 | Erhöhung |
| 61 | Handhabe | a | Radius |
| 62 | Ausnehmung | b | Schneidrichtung |
| 63 | erster Lenker | c | Pfeil |
| 64 | zweiter Lenker | d | Breite |
| 65 | Steuerbereich | e | Tiefe |
| 66 | Steuerbereich | f | Tiefe |
| 67 | Schraube | g | Abstand |
| 68 | Bohrung | h | Länge |
| 69 | Schneidenspitze | k | Gesamtlänge |
| 70 | Konturlinie | m | Breite |
| 71 | Einsenkung | n | Höhe |
| 72 | gekrümmter Bereich | r | Verschieberichtung |
| 73 | Abschnitt | x | geometrische Drehachse |
| 74 | Abschnitt | y | geometrische Achse |
| 75 | Grundkörper | z | geometrische Achse |
| 76 | Befestigungsfortsatz | E | Schneidebene |
| 77 | Aufnahmetasche | F | Klemmfläche |
| 78 | Befestigungsschraube | M | Zangenmaul |
| 79 | Langloch | α | Winkel |
| 80 | Stirnfläche | β | Winkel |
| 81 | Rippe | γ | Öffnungswinkel |
| 82 | Ausnehmung | δ | Konuswinkel |
| 83 | Ausnehmungsboden | ε | Winkel |

## Patentansprüche

1. Abisolierzange (1) mit zwei äußeren Klemmbacken (19, 20), zwei inneren Schneidbacken (22, 23) und zwei Griffteilen (4, 5), wobei die Schneidbacken (22, 23) durch eine Zugstange (30) im Zuge eines Zusammendrückens der Griffteile (4, 5) gegen die Kraft einer auf die Zugstange (30) wirkenden Feder (39) aus einer Ausgangsstellung in eine Endstellung verlagerbar sind, wobei weiter die Zugstange (30) von einer in einem Langloch (34) bewegbaren Zugachse (33) durchsetzt ist, **dadurch gekennzeichnet, dass** die Zugstange (30) an ihrem griffseitigen Ende ein an der Zugstange (30) befestigtes Verschiebeteil aufweist, das gegen die Kraft der Feder (39) relativ zu der Zugstange (30) verschiebbar ist, zur Befreiung der Zugstange (30) aus einer griffseitigen Lagerung.

2. Abisolierzange nach Anspruch 1, **dadurch gekennzeichnet, dass** das Verschiebeteil als eine Hülse (35) ausgebildet ist.

3. Abisolierzange nach einem der vorhergehenden Ansprüche, **dadurch gekennzeichnet, dass** die aus der griffseitigen Lagerung befreite Zugstange (30) um die Zugachse (33) schwenkbar ist, zur Freigabe der Schneidbacken (22, 23).

4. Abisolierzange nach einem der vorhergehenden Ansprüche, **dadurch gekennzeichnet, dass** eine Längsrichtung des Langlochs (34) mit einer Verschieberichtung (r) der Zugstange (33) einen spitzen Winkel (α) einschließt.

5. Abisolierzange nach einem der vorhergehenden Ansprüche, **dadurch gekennzeichnet, dass** das Verschiebeteil zur griffseitigen Lagerung der Zugstange (30) einen Rastvorsprung (44) aufweist, zum Eingriff in eine an dem Griffteil (4) ausgebildete Rastausnehmung (45).

6. Abisolierzange nach einem der vorhergehenden Ansprüche, **dadurch gekennzeichnet, dass** die Zugstange (30) zugeordnet ihrem griffseitigem Ende ein weiteres Langloch (38) aufweist, das von einem Halterungsteil (36) des Verschiebeteils durchgriffen ist.

7. Abisolierzange nach einem der vorhergehenden Ansprüche, **dadurch gekennzeichnet, dass** die Feder (39) einerseits an der Zugstange (30) und andererseits an dem Verschiebeteil abgestützt ist.

8. Abisolierzange nach einem der vorhergehenden Ansprüche, **dadurch gekennzeichnet, dass** die Feder (39) eine Zylinderdruckfeder ist.

9. Abisolierzange nach einem der vorhergehenden Ansprüche, **dadurch gekennzeichnet, dass** die Zugstange (30) zugeordnet den Schneidbacken (22, 23) eine im Wesentlichen in Schließ- bzw. Öffnungsrichtung der Schneidbacken (22, 23) verlaufende Einfahröffnung (32) für eine Schwenkachse (27) der Schneidbacken (22, 23) aufweist.

## Claims

1. A stripping pliers (1) having two outer clamping jaws (19, 20), two inner cutting jaws (22, 23) and two handle parts (4, 5), wherein, in the course of pressing together the handle parts (4, 5), the cutting jaws (22, 23) can be displaced by a pull rod (30) from a starting position into an end position against the force of a spring (39) acting on the pull rod (30), wherein furthermore the pull rod (30) is traversed by a pull pin (33) which can be moved in a slot (34), **characterized in that** at its handle-side end, the pull rod (30) has a displacement part fastened to the pull rod (30), which can be displaced against the force of the spring (39) relative to the pull rod (30), to free the pull rod (30) from a handle-side mounting.

2. The stripping pliers according to claim 1, **characterized in that** the displacement part is configured as a sleeve (35).

3. The stripping pliers according to one of the preceding claims, **characterized in that** the pull rod (30) freed from the handle-side mounting is pivotable about a pivot pin (33) for release of the cutting jaws (22, 23) .

4. The stripping pliers according to one of the preceding claims, **characterized in that** a longitudinal direction of the slot (34) encloses an acute angle (α) with a displacement direction (r) of the pull rod (33).

5. The stripping pliers according to one of the preceding claims, **characterized in that** the displacement part for the handle-side mounting of the pull rod (30) has a latching projection (44) for engagement in a latching recess (45) formed on the handle part (4).

6. The stripping pliers according to one of the preceding claims, **characterized in that** the pull rod (30) has a further slot (38) assigned to its handle-side end, which is traversed by a retainer part (36) of the displacement part.

7. The stripping pliers according to one of the preceding claims, **characterized in that** the spring (39) is supported on the one hand on the pull rod (30) and on the other hand on the displacement part.

8. The stripping pliers according to one of the preceding claims, **characterized in that** the spring (39) is a cylinder compression spring.

9. The stripping pliers according to one of the preceding claims, **characterized in that** the pull rod (30) assigned to the cutting jaws (22, 23) has an insertion opening (32) for a pivot pin (27) of the cutting jaws (22, 23) which runs substantially in the closing or opening direction of the cutting jaws (22, 23).

## Revendications

1. Pince à dénuder (1) avec deux mâchoires de serrage extérieures (19, 20), deux mâchoires de coupe intérieures (22, 23) et deux parties de poignée (4, 5), dans laquelle les mâchoires de coupe (22, 23) peuvent être déplacées d'une position initiale à une position finale par une tige de traction (30) au cours du serrage des parties de poignée (4, 5) à l'encontre la force d'un ressort (39) agissant sur la tige de traction (30), dans laquelle, en outre, la tige de traction (30) est traversée par un axe de traction (33) mobile dans un trou oblong (34), **caractérisée en ce que** la tige de traction (30) présente, à son extrémité côté poignée, une partie de déplacement qui est fixée à la tige de traction (30) et qui peut être déplacée par rapport à la tige de traction (30) à l'encontre de la force du ressort (39) pour libérer la tige de traction (30) d'un support côté poignée.

2. Pince à dénuder selon la revendication 1, **caractérisée en ce que** la partie de déplacement est formée comme un manchon (35).

3. Pince à dénuder selon l'une des revendications précédentes, **caractérisée en ce que** la tige de traction (30) libérée du support côté poignée peut pivoter autour de l'axe de traction (33) pour libérer les mâchoires de coupe (22, 23).

4. Pince à dénuder selon l'une des revendications précédentes, **caractérisée en ce qu'**une direction longitudinale du trou oblong (34) forme un angle aigu (α) avec une direction de déplacement (r) de la tige de traction (33).

5. Pince à dénuder selon l'une des revendications précédentes, **caractérisée en ce que** la partie de déplacement pour le support côté poignée de la tige de traction (30) présente une saillie d'encliquetage (44) pour engagement dans un évidement d'encliquetage (45) au niveau de la partie de poignée (4).

6. Pince à dénuder selon l'une des revendications précédentes, **caractérisée en ce que** la tige de traction (30) présente, associé à son extrémité côté poignée, un autre trou oblong (38) à travers lequel passe une partie de maintien (36) de la partie de déplacement.

7. Pince à dénuder selon l'une des revendications précédentes, **caractérisée en ce que** le ressort (39) prend appui d'une part sur la tige de traction (30) et d'autre part sur la pièce de déplacement.

8. Pince à dénuder selon l'une des revendications précédentes, **caractérisée en ce que** le ressort (39) est un ressort de compression cylindrique.

9. Pince à dénuder selon l'une des revendications précédentes, **caractérisée en ce que** la tige de traction (30) présente, associée aux mâchoires de coupe (22, 23), une ouverture d'insertion (32) pour un axe de pivotement (27) des mâchoires de coupe (22, 23), laquelle ouverture s'étend sensiblement dans la direction de fermeture ou d'ouverture des mâchoires de coupe (22, 23).
